# EUROPEAN PATENT SPECIFICATION

(11) **EP 4 081 705 B1**
(45) Date of publication and mention of the grant of the patent: **24.07.2024**
(21) Application number: 20845230.0
(22) Date of filing: 23.12.2020
(51) Int. Cl.: F02M 21/02, G05D 16/20

(54) **A PRESSURE REGULATOR ASSEMBLY FOR A SYSTEM FOR SUPPLY OF GASEOUS FUEL TO AN INTERNAL COMBUSTION ENGINE**
DRUCKREGLERANORDNUNG FÜR EIN SYSTEM ZUR VERSORGUNG EINES VERBRENNUNGSMOTORS MIT GASFÖRMIGEM KRAFTSTOFF
ENSEMBLE RÉGULATEUR DE PRESSION POUR UN SYSTÈME D'ALIMENTATION EN CARBURANT GAZEUX D'UN MOTEUR À COMBUSTION INTERNE

(30) Priority: 23.12.2019 IT 201900025390
(43) Date of publication of application: 02.11.2022
(73) Proprietor: Westport Fuel Systems Italia S.r.l., 12062 Cherasco (CN) (IT)
(72) Inventor: CERATTO, Danilo, 12051 Alba (CN) (IT); CORAGLIA, Alberto, 12062 Cherasco (CN) (IT); BOTTACIN, Diego, 12062 Cherasco (CN) (IT)
(74) Representative: FRKelly
(86) International application number: PCT/IB2020/062412
(87) International publication number: WO 2021/130705

(56) References cited:
- EP-A1- 0 262 539
- US-A1- 2013 167 950
- US-A1- 2013 255 638

## Description

### TECHNICAL FIELD

This invention relates to a pressure regulator assembly for a system for supply of gaseous fuel to an internal combustion engine.

### BACKGROUND ART

As known, a system for supply of gaseous fuel to an internal combustion engine, for example, LPG gas or methane, comprises a highpressure gas tank, a plurality of injectors, a pressure regulator assembly inserted between the tank and the injectors to vary the pressure of the gas directed to the injectors and an electronic command and control unit to control the gas flow toward the injectors depending on the variations of the operation conditions of the engine itself.

The sensitivity and precision of a pressure regulator assembly are therefore essential for the proper operation of the supply system regardless of the operating conditions of the engine and, however, in order to always be able to ensure high-level performance of the engine itself.

Various types of pressure regulator assemblies are currently known, for example from US 2013/255638 A1, EP 0 262 539 A1 and US 2013/167950 A1.

The so-called two-stage electromechanical regulator assemblies belong to one type and comprise, in the direction of flow of the gaseous fuel, a first control stage defined by a mechanical pressure reducer and a second reduction stage defined by a solenoid valve controlled by the electronic control unit. The solenoid valve controlled by the control unit regulates the flow rate of the fuel sent to the injectors.

The mechanical pressure reducer comprises an interception shutter of the gaseous fuel at the inlet, which is commanded to open by the action of an appropriately sized spring against which an action generated by the gas exiting the same mechanical reducer is exerted.

The known regulator assemblies of the type defined above, even if used universally, do not allow for regulation of the outlet pressure in a simple and especially precise manner, i.e. the flow rate of gaseous fuel to the engine, in particular in presence of sudden variations of the rotational speed of the same engine.

The foregoing is essentially due to the implementation characteristics and therefore to the operation of the mechanical reducer. Indeed, in said reducer, a mechanical spring is provided which exerts such force on opening that it results in an almost constant pressure value of the fuel exiting the reducer.

The known mechanical springs often have high inertia which reduces the response time of the entire regulator assembly.

Lastly, since the outlet of the mechanical reducer communicates directly with the inlet of the solenoid valve, the gaseous fuel exerts an opening thrust of the solenoid valve which is opposed by the action of a mechanical spring of the same solenoid valve which works when closing. It is specifically the high pressure at the inlet to the solenoid valve that makes the precise control of the same solenoid valve for a defined flow rate complicated and relatively difficult, in addition to requiring springs that are capable of exerting high thrust forces that oppose the opening action exerted by the fuel at the inlet to the solenoid valve.

### DISCLOSURE OF INVENTION

The purpose of this invention is that of providing a pressure regulator assembly, which is extremely simple from the point of view of construction, with limited encumbrance and weight and is easy to control.

In particular, the purpose of this invention is that of providing a pressure regulator assembly, which, when compared with known regulator assemblies, allows for the precise variation of the fuel flow rate within a wide flow rate range without changes to the encumbrance and costs or in the presence of contained costs and encumbrance without changes to the flow rate.

According to this invention, with the provision of a pressure regulator assembly for a system for supply of gaseous fuel to an internal combustion engine; the regulator assembly comprising a first pressure reducer adapted to receive at the inlet the gaseous fuel and a second pressure reducer arranged in series with the first reducer and comprising an electric actuator and a mechanical return spring for regulating the pressure/flow rate of gaseous fuel supplied to the engine; the first reducer comprising:
- a fuel inlet chamber;
- a fuel outlet chamber;
- an intermediate chamber arranged between the inlet and outlet chambers
- a separation member inserted in a fluid-tight manner between said intermediate chamber and said outlet chamber;
- a communication passage of the inlet chamber to the outlet chamber;
- an interception body integrally connected to said separation member and configured to intercept the fuel being conveyed along said communication passage; and
- a mechanical opening spring housed in said intermediate chamber and thrusting the separation member toward said outlet chamber;
   said second reducer comprising an inlet duct communicating with the outlet chamber of said first reducer;
- an outlet chamber of the gaseous fuel directed toward the engine; and
- a shutter body inserted between said inlet duct and said outlet chamber and driven by said electric actuator and by said return spring, characterized in that said intermediate chamber is a sealed chamber and in that it furthermore comprises a communication duct of said intermediate chamber with said outlet chamber of said second reducer.

Moreover, this invention relates to a method for supplying a gaseous fuel to an internal combustion engine.

According to this invention a method is provided for supplying a gaseous fuel to an internal combustion engine, as claimed in claim 8.

### BRIEF DESCRIPTION OF THE DRAWINGS

The invention will now be described with reference to the appended drawings, which illustrate a non-limiting implementation example, wherein:
Fig. 1 illustrates, schematically and substantially in blocks, an internal combustion engine supplied by a supply system equipped with a pressure regulator assembly according to the dictates of this invention;
Fig. 2 illustrates, in cross section and in enlarged scale, the pressure regulator of Fig. 1;
Fig. 3 illustrates, schematically and substantially in blocks, a detail of Fig. 2;
Fig. 4 is a figure similar to Fig. 3, and illustrates a variant of a detail of Fig. 3; and
Fig. 5 graphically illustrates the operation of a traditional pressure regulator and of two different pressure regulators according to the invention and illustrated in Fig. 3 and Fig. 4.

### BEST MODE FOR CARRYING OUT THE INVENTION

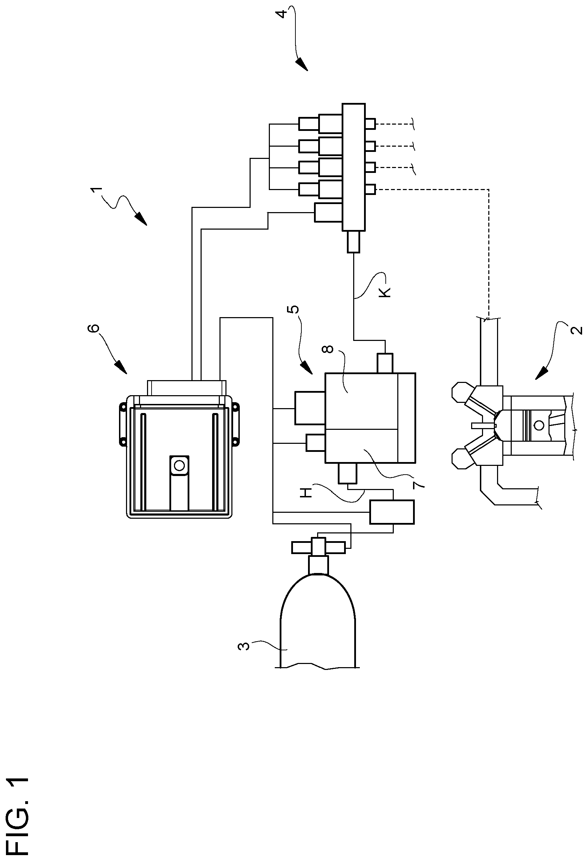

In Fig. 1, the number 1 indicates, as a whole, a system for supplying a gaseous fuel, for example, LPG or methane, to an internal combustion engine 2 of a vehicle that is not shown.

The system 1 comprises a tank 3 containing the fuel to be supplied to the engine 2, an injector assembly 4, known per se and not described in detail, and a fuel pressure regulator assembly 5 inserted between the tank 3 and the injector assembly 4.

The system 1 comprises, moreover, an electronic control unit 6, this also known per se and not described in detail, electrically connected to the injector assembly 4 and to the regulator assembly 5 to supply predefined flow rates of fuel to the engine 2 on the basis of the operating conditions of the engine 2 itself.

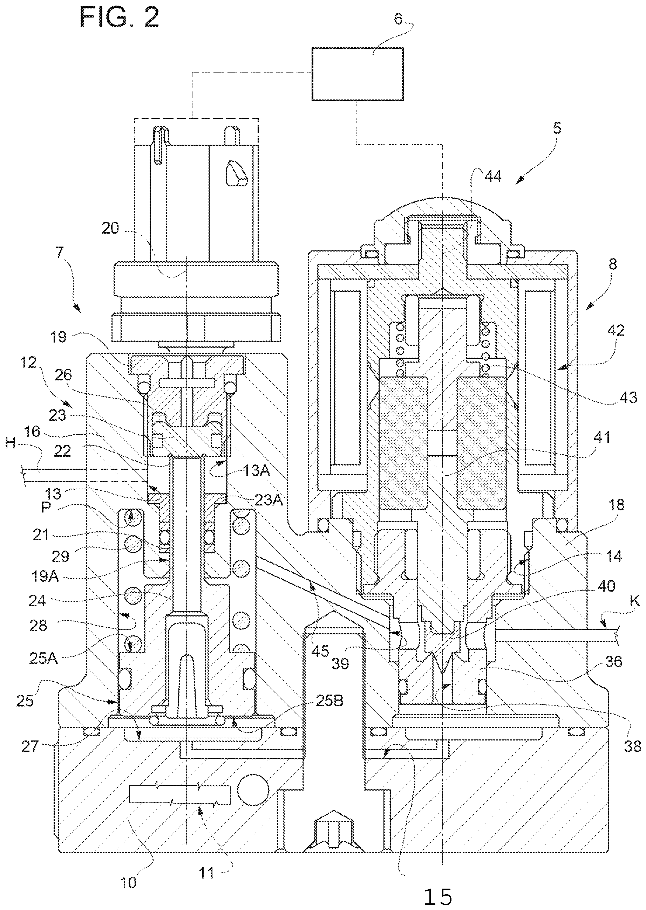

Again with reference to Fig. 1 and, in particular, to Fig. 2, the regulator assembly 5 comprises, in succession, in the direction of the forward flow of the fuel from tank 3 toward the engine 2, a pressure reducer 7 with mechanical and pneumatic actuation and an electric pressure reducer 8 that is electrically commanded and controlled by the control unit 6 and made up of a servo valve, advantageously a proportional valve.

With reference to Fig. 2, the regulator assembly 5 comprises a base body 10 housing a fuel heating device, known per se and schematically illustrated, and a hollow body 12, coupled in a fluid-tight manner to the base body 10.

The hollow body 12 extends from the base body 10 and with the base body 10 itself, delimits two recesses 13 and 14, that on the one side are open, and on the other side are in communication between one another through a communication duct 15 (see Fig. 2) which extends in the base body 10.

The hollow body 10 comprises a part 16 (see Fig. 2) which delimits the recess 13 and practically defines the external casing of the pressure reducer 7, and a part 18, which delimits the recess 14 and defines the external casing of the reducer 8.

The pressure reducer 7, then, comprises a closing body 19 which closes the fluid-tight recess 13 and a hollow stem 19A (see Fig. 2), which extends within the recess 13 coaxially to an axis 20.

The stem 19A, in turn, comprises an intermediate part 21 coupled to the part 16 in an axially sliding and fluid-tight manner, an end part suitable to abut against a non-metallic support body 23 and an opposite end part 24 permanently connected to a plunger 25.

The body 23 is coupled in a fluid-tight manner to the closing body 19 and delimits with the closing body 19 itself a chamber 26 in communication with the outside. The body 23, moreover, delimits with a sealing body 23A crossed through by the stem 19A, a fuel inlet chamber 13A which is connected to the tank 3 by means of a pipe H (Fig. 1 and Fig. 2) and isolated from the chamber 26.

Again, with reference to Fig. 2, the plunger 25 delimits with the body 10 and the part 16 an outlet chamber 27, wherein duct 15 emerges (Fig. 2).

Again, with reference to Fig. 2, the plunger 25 then delimits, with part 16 an intermediate sealed chamber 28. The intermediate chamber 28 houses a helicoidal spring 29 forced against a surface 25A of the piston 25, on the one side, and a shoulder P of the part 16, on the other side.

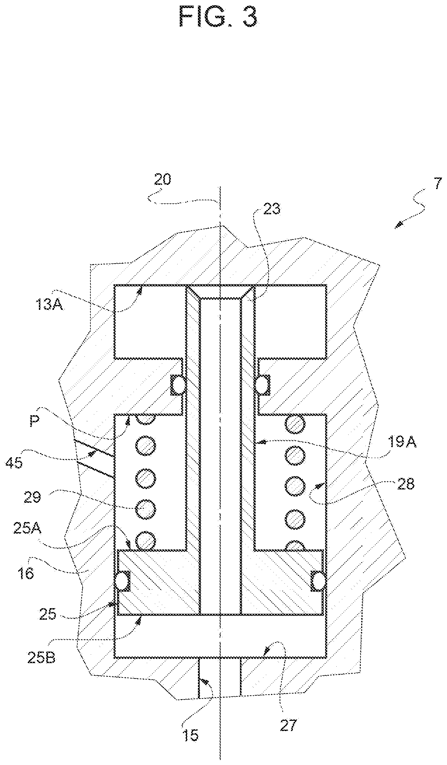

With reference to Fig. 2 and, in particular to Fig. 3, the surface 25B of the piston 2 opposite the contact surface 25A of the spring 29 and delimiting the chamber 27 has an extension that is greater than the extension of the surface 25A itself.

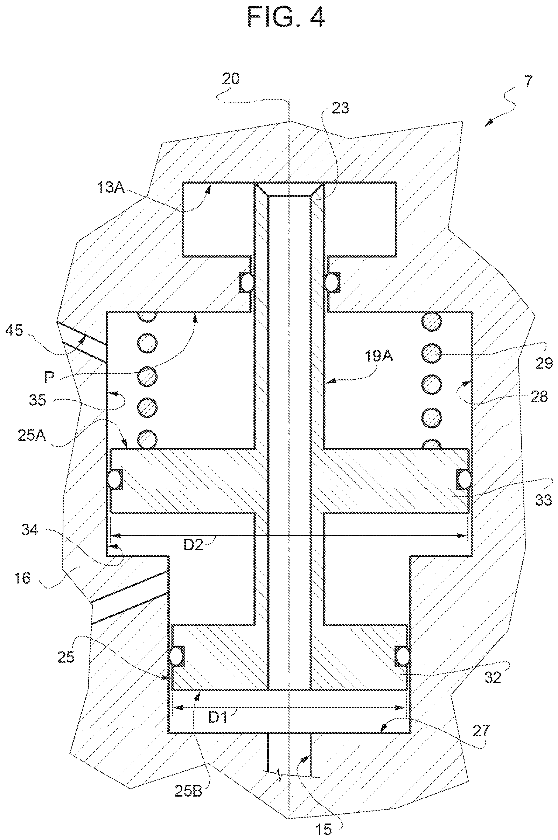

In the variant illustrated in Fig. 4, the piston 25 comprises two circular flanges 32 and 33 that are axially distanced one from the other along the axis 20 and both jointly connected to the stem 19A.

The flange 32 is coupled in a fluid-tight manner to part 16, delimits the outlet chamber 27 and has an external diameter D1 that is lesser than the external diameter D2 of the flange 33.

The flange 33 is coupled to the fluid-tight part 16 and subdivides the intermediate chamber 28 into two chambers 34 and 35, of which the chamber 35 is a sealed chamber which houses the spring 29, whereas the chamber 34 is a chamber that communicates with the outside and therefore at ambient pressure.

Again, with reference to Fig. 2, the reducer 8, comprises, moreover, an end part 36 that is inserted in a fluid-tight manner in the part 18 and is crossed by a duct 38 that communicates with duct 15 (see Fig. 2), on the one side, and with an annular outlet chamber 39, on the other.

The outlet chamber 39 is obtained between the tubular part 18 and the end part 36 and communicates with the inlet of the injector assembly 4 through the duct K to supply gaseous fuel at reduced pressure to the engine 2 (Fig. 1).

Inside chamber 39, the reducer 8 comprises a mobile shutter body 40, known per se, for adjustment of the passage cross-section of duct 38. The mobile shutter body 40 is permanently connected to a mobile body 41 of an electric actuator 42 of the reducer 8, and it is thrusted and brought to close the duct 38 by the action of a helicoidal spring 43.

The electric actuator 42 is known per se and not described in detail and it moves the mobile shutter body 40 along an axis 44, advantageously, but not necessarily, parallel to the axis 20 under the control of the electronic control unit 6.

Again, with reference to Fig. 2, the outlet chamber 39 of the reducer 8 is placed in fluid communication by means of a duct 45 emerging in the chamber 39, on the one side, and in the chambers 28 or 35 (Fig. 4) where the spring 29 is housed, on the other.

From that just stated, it appears to be evident that due to the presence of duct 45, the same pressure value is present in chambers 39, 28 or 35, namely, pressure P2 is present in the outlet chamber 39 of the reducer 8. Therefore, it follows that, during operation, both the force of the spring 29 and the force of a pneumatic spring generated by the action of the pressure P2 acting on the surface 25A of the piston 25, act on the piston 35. Consequently, the pressure P1 at the outlet from the pressure reducer 7 will be the sum of a "mechanical" component generated by the spring 29 and of a "pneumatic" component generated by the pressure P2.

From the above, it is therefore evident that when compared to the known solutions, the pressure reducer 7 is "servo and close-loop controlled" and, in particular, a reducer the outlet pressure P1 of which is variable not only in a continuous manner, but also in a proportional manner to the, or however in function of the, pressure P2 of the fuel sent and directed to the injector assembly 4.

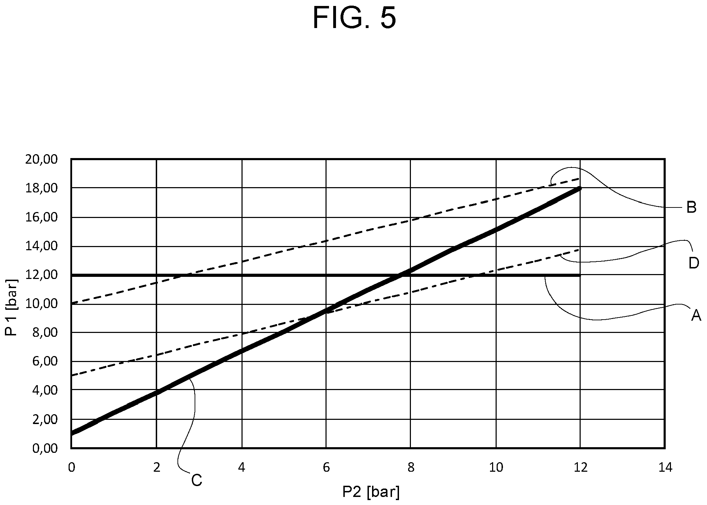

The above is immediately derivable from the operational graphs shown in Fig. 5, where line A represents the constant trend of the outlet pressure P1 of a traditional pressure regulator with mechanical reducer with mechanical spring upon variation of the pressure P2, whereas line B represents the variation of the pressure P1, once again upon variation of the pressure P2, for the reducer 7 in the configuration illustrated in Fig. 3. Line C represents, instead, the variation of pressure P1, once again upon variation of the pressure P2, for the reducer 7 in the configuration illustrated in Fig. 4.

From examination of the trends of curves B and C, one immediately notices that in both of the described embodiment solutions of the reducer 7, the related spring 29 exerts a force that is considerably lesser than the one exerted by the springs used in traditional mechanical reducers. In fact, in reducer 7, when the pressure P2 approaches zero, pressure P1, which is in practice the force generated solely by the mechanical component, is always less than the value of the pressure P1 of a traditional regulator. When the force of the spring 29 is reduced, while maintaining the geometrical situation of the stem-cylinder assembly, the curve B shifts downwards remaining substantially parallel to itself, as demonstrated by curve D.

A circumstance wherein the force exerted by the spring 29 is always minimal and is also represented by line C, where the different inclination when compared to curves B and D comes as a consequence of the fact that surface 25B is greater than surface 25A.

In conclusion, it is evident that once the force of the spring 29 and/or the ratio between the surfaces 25A and 25B are determined, it is possible to configure the regulator assembly 5 or rather create its characteristic specific line in such a way that for higher pressures P2 it is possible to have, with the same maximum efflux section, corresponding to the passage section of duct 38, a greater flow rate than that of the known pressure regulators.

The control of the reducer 7 on the basis of the pressure P2 then allows for easier control of the outlet pressure of the reducer 8, the shutter 40 of which is commanded in opening specifically by pressure P1. The electric actuator 42 generates a magnetic field that tends to open the shutter 40 and therefore acts in the same direction as the pressure force generated by pressure P1. The spring 43 exerts, instead, an opposite force, namely such that it makes the shutter 40 close.

Therefore, in the pressure regulator, when the electric reducer 8 is kept closed and the outlet pressure P2 is equal to the atmospheric value, the force generated by the fuel on the shutter 40 is minimal. From this, it follows that when compared to known solutions, the force required of spring 43 to keep the shutter 40 in a sealed state will also be minimal and it may therefore be dimensioned accordingly.

Therefore, when it is necessary to supply low flow rates and, in such a case, one, normally, operates with relatively low P2 pressure values (see Fig. 5), it is possible to carry out the dosing in an extremely more precise manner inasmuch as the action that is necessary to move the shutter 40 overcoming the action of the spring 43 is low and the pressure P1 is lower.

When, instead, it is necessary to supply high flow rates, and the same is obtained with high P2 values (see Fig. 5), once again when compared to known solutions, it is possible to have higher flow rates inasmuch as the value of the pressure P1 is higher and inasmuch as the same acts on the opening of the shutter 40, which will easily move in opening, making the constriction minimal.

From the above, it is evident that in regulator 5, the two pressure reducers 7 and 8 are commanded and controlled solely with the electric actuator 42 and therefore by sending a sole command and control signal.

It is evident from the above that modifications and variants may be foreseen without leaving the scope of protection of this invention. In particular, the reducers 7 and 8 can be embodied in a manner different from that described by way of example. The duct 45 may not be obtained within the body 12, but from a passage that is at least partially external to the body 12 itself.

Moreover, in the reducer 7, the piston 25 could be replaced with a different fluid-tight separation member and, for example, of the type comprising a membrane, without this modifying the operation method of the reducer 7 itself or of the assembly 5.

## Claims

1. A pressure regulator assembly (5) for a system (1) for supply of gaseous fuel to an internal combustion engine; the regulator assembly comprising a first pressure reducer (7) adapted to receive at the inlet the gaseous fuel and a second pressure reducer (8) arranged in series with the first reducer and comprising an electric actuator (42) and a mechanical return spring for regulating the pressure/flow rate of gaseous fuel supplied to the engine; the first reducer comprising: - a fuel inlet chamber;
- a fuel outlet chamber (27);
- an intermediate chamber (28) arranged between the inlet and outlet chambers
- a separation member (25) inserted in a fluid-tight manner between said intermediate chamber and said outlet chamber;
- a communication passage of the inlet chamber to the outlet chamber;
- an interception body integrally connected to said separation member and configured to intercept the fuel being conveyed along said communication passage; and - a mechanical opening spring (29) housed in said intermediate chamber and thrusting the separation member toward said outlet chamber; said second reducer comprising an inlet duct (15) communicating with the outlet chamber of said first reducer;
- a second outlet chamber (39) of the gaseous fuel directed towards the engine; and a shutter body inserted between said inlet duct and said second outlet chamber and driven by said electric actuator and by said return spring, **characterized in that** said intermediate chamber is a sealed chamber and **in that** it furthermore comprises a communication duct (45) of said intermediate chamber with said second outlet chamber of said second reducer.

2. The regulator according to claim 1, **characterized in that** said separation member (25) has a first head surface, which delimits said intermediate chamber and a second head surface opposite to said first head surface, and which delimits said outlet chamber; said first head surface having an extension smaller than the extension of the second head surface.

3. The regulator according to claim 1, **characterized in that** said separation member (25) has a first head surface, which delimits said intermediate chamber and a second head surface opposite to said first head surface, and which delimits said outlet chamber; said first head surface having an extension greater than the extension of said second head surface.

4. The regulator according to claim 3, **characterized in that** said separation member (25) delimits a further annular chamber arranged between said first and second head surfaces; said further annular chamber communicating with the outside.

5. The regulator according to any of the preceding claims, **characterized in that** it comprises a single electronic command and control unit (6) of said first and second reduction stages; said electronic unit controlling said regulator by sending a single command signal to said electric actuator.

6. The regulator according to any of the preceding claims, **characterized in that** said second pressure reducer (8) is a continuously controlled proportioning valve.

7. The regulator according to any of the preceding claims, **characterized in that** said separation member is a piston (25) or comprises a membrane.

8. A method for supplying a gaseous fuel to an internal combustion engine by using a pressure regulator assembly (5) as claimed in claim 1; the method comprising the steps of exerting on the separation member of the first pressure reducer a pneumatic action acting in the same direction of the mechanical action exerted by the mechanical opening spring, pressurizing the intermediate chamber with a pressure equal to the pressure present in the second outlet chamber of the second reducer.

## Patentansprüche

1. Eine Druckregleranordnung (5) für ein System (1) zur Versorgung eines Verbrennungsmotors mit gasförmigem Kraftstoff; die Regleranordnung umfasst einen ersten Druckminderer (7), der zum Empfangen des gasförmigen Kraftstoffs am Einlass geeignet ist, und einen zweiten Druckminderer (8), der in Reihe mit dem ersten Druckminderer angeordnet ist und einen elektrischen Aktuator (42) und eine mechanische Rückstellfeder zum Regeln des Drucks/der Durchflussrate des dem Motor zugeführten gasförmigen Kraftstoffs umfasst; der erste Druckminderer umfasst: eine Kraftstoffeinlasskammer;
- eine Kraftstoffauslasskammer (27);
- eine Zwischenkammer (28), die zwischen der Einlass- und der Auslasskammer angeordnet ist
- ein Trennelement (25), das flüssigkeitsdicht zwischen der Zwischenkammer und der Auslasskammer eingesetzt ist;
- einen Verbindungsdurchgang von der Einlasskammer zur Auslasskammer;
- einen Abfangkörper, der integral mit dem Trennelement verbunden und so konfiguriert ist, dass er den entlang des Verbindungskanals beförderten Kraftstoff abfängt; und eine mechanische Öffnungsfeder (29), die in der Zwischenkammer untergebracht ist und das Trennelement in Richtung der Auslasskammer drückt; wobei das zweite Reduzierstück einen Einlasskanal (15) umfasst, der mit der Auslasskammer des ersten Reduzierstücks in Verbindung steht;
- eine zweite Auslasskammer (39) für den gasförmigen Kraftstoff, die zum Motor gerichtet ist; und einen zwischen dem Einlasskanal und der zweiten Auslasskammer eingesetzten und von dem elektrischen Stellglied und der Rückholfeder angetriebenen Verschlusskörper, **dadurch gekennzeichnet, dass** die Zwischenkammer eine abgedichtete Kammer ist und dass sie außerdem einen Verbindungskanal (45) der Zwischenkammer mit der zweiten Auslasskammer des zweiten Reduzierstücks umfasst.

2. Regler nach Anspruch 1, **dadurch gekennzeichnet, dass** das Trennelement (25) eine erste Kopffläche aufweist, die die Zwischenkammer begrenzt, und eine zweite Kopffläche, die der ersten Kopffläche gegenüberliegt und die die Auslasskammer begrenzt, wobei die erste Kopffläche eine kleinere Ausdehnung aufweist als die Ausdehnung der zweiten Kopffläche.

3. Regler nach Anspruch 1, **dadurch gekennzeichnet, dass** das Trennelement (25) eine erste Kopffläche aufweist, die die Zwischenkammer begrenzt, und eine zweite Kopffläche, die der ersten Kopffläche gegenüberliegt und die die Auslasskammer begrenzt, wobei die erste Kopffläche eine größere Ausdehnung aufweist als die Ausdehnung der zweiten Kopffläche.

4. Regler nach Anspruch 3, **dadurch gekennzeichnet, dass** das Trennelement (25) eine weitere ringförmige Kammer begrenzt, die zwischen der ersten und der zweiten Kopffläche angeordnet ist, wobei die weitere ringförmige Kammer mit der Außenseite in Verbindung steht.

5. Regler nach einem der vorhergehenden Ansprüche, **dadurch gekennzeichnet, dass** er eine einzige elektronische Befehls- und Steuereinheit (6) für die erste und zweite Untersetzungsstufe umfasst, wobei die elektronische Einheit den Regler steuert, indem sie ein einziges Befehlssignal an den elektrischen Aktuator sendet.

6. Regler nach einem der vorhergehenden Ansprüche, **dadurch gekennzeichnet, dass** der zweite Druckminderer (8) ein kontinuierlich gesteuertes Proportionierungsventil ist.

7. Regler nach einem der vorhergehenden Ansprüche, **dadurch gekennzeichnet, dass** das Trennelement ein Kolben (25) ist oder eine Membran umfasst.

8. Verfahren zum Zuführen eines gasförmigen Kraftstoffs zu einem Verbrennungsmotor unter Verwendung einer Druckregleranordnung (5) nach Anspruch 1, wobei das Verfahren diese Schritte umfasst: Ausüben einer pneumatischen Wirkung auf das Trennelement des ersten Druckminderers, die in die gleiche Richtung wirkt wie die von der mechanischen Öffnungsfeder ausgeübte mechanische Wirkung, wodurch die Zwischenkammer mit einem Druck beaufschlagt wird, der dem in der zweiten Auslasskammer des zweiten Druckminderers herrschenden Druck entspricht.

## Revendications

1. Ensemble régulateur de pression (5) pour un système (1) d'alimentation en carburant gazeux d'un moteur à combustion interne ; l'ensemble régulateur comprenant un premier détendeur (7) adapté pour recevoir à l'entrée le carburant gazeux et un second détendeur (8) agencé en série avec le premier détendeur et comprenant un actionneur électrique (42) et un ressort de rappel mécanique pour réguler le taux de pression/débit de carburant gazeux fourni au moteur ; le premier détendeur comprenant : une chambre d'entrée de carburant ;
- une chambre de sortie de carburant (27) ;
- une chambre intermédiaire (28) agencée entre les chambres d'entrée et de sortie
- un élément de séparation (25) inséré de manière étanche entre ladite chambre intermédiaire et ladite chambre de sortie ;
- un passage de communication de la chambre d'entrée vers la chambre de sortie ;
- un corps d'interception relié intégralement audit élément de séparation et configuré pour intercepter le carburant étant transporté le long dudit passage de communication ; et un ressort d'ouverture mécanique (29) logé dans ladite chambre intermédiaire et poussant l'élément de séparation vers ladite chambre de sortie ; ledit second détendeur comprenant un conduit d'entrée (15) communiquant avec la chambre de sortie dudit premier détendeur ;
- une seconde chambre de sortie (39) du carburant gazeux dirigée vers le moteur ; et un corps de volet inséré entre ledit conduit d'entrée et ladite seconde chambre de sortie et entraîné par ledit actionneur électrique et par ledit ressort de rappel, **caractérisé en ce que** ladite chambre intermédiaire est une chambre étanche et **en ce qu'**elle comprend en outre un conduit de communication (45) de ladite chambre intermédiaire avec ladite seconde chambre de sortie dudit second détendeur.

2. Régulateur selon la revendication 1, **caractérisé en ce que** ledit élément de séparation (25) présente une première surface de tête, qui délimite ladite chambre intermédiaire et une seconde surface de tête opposée à ladite première surface de tête et qui délimite ladite chambre de sortie ; ladite première surface de tête présentant une extension plus petite que l'extension de la seconde surface de tête.

3. Régulateur selon la revendication 1, **caractérisé en ce que** ledit élément de séparation (25) présente une première surface de tête, qui délimite ladite chambre intermédiaire et une seconde surface de tête opposée à ladite première surface de tête et qui délimite ladite chambre de sortie ; ladite première surface de tête présentant une extension plus grande que l'extension de ladite seconde surface de tête.

4. Régulateur selon la revendication 3, **caractérisé en ce que** ledit élément de séparation (25) délimite une autre chambre annulaire agencée entre lesdites première et seconde surfaces de tête ; ladite autre chambre annulaire communiquant avec l'extérieur.

5. Régulateur selon l'une quelconque des revendications précédentes, **caractérisé en ce qu'**il comprend une seule unité électronique de commande et de contrôle (6) desdits premier et second étages de réduction ; ladite unité électronique commandant ledit régulateur en envoyant un unique signal de commande audit actionneur électrique.

6. Régulateur selon l'une quelconque des revendications précédentes, **caractérisé en ce que** ledit second détendeur (8) est un compensateur de freinage à commande continue.

7. Régulateur selon l'une quelconque des revendications précédentes, **caractérisé en ce que** ledit élément de séparation est un piston (25) ou comprend une membrane.

8. Procédé de fourniture d'un carburant gazeux à un moteur à combustion interne à l'aide d'un ensemble régulateur de pression (5) selon la revendication 1 ; le procédé comprenant les étapes consistant à exercer sur l'élément de séparation du premier détendeur une action pneumatique agissant dans le même sens que l'action mécanique exercée par le ressort d'ouverture mécanique, à mettre sous pression la chambre intermédiaire avec une pression égale à la pression présente dans la seconde chambre de sortie du second détendeur.
